# EUROPEAN PATENT APPLICATION

(11) **EP 4 650 200 A1**
(43) Date of publication of application: **19.11.2025**
(21) Application number: 24796866.2
(22) Date of filing: 16.04.2024
(51) Int. Cl.: B60K 1/00, B60K 11/04, B60L 50/60

(54) **VEHICLE DRIVE DEVICE**

(30) Priority: 27.04.2023 JP 2023073784
(71) Applicant: AISIN CORPORATION, Kariya-shi, Aichi 448-8650 (JP)
(72) Inventor: MAEDA Takuyo, Kariya-shi, Aichi 448-8650 (JP)
(74) Representative: Kramer Barske Schmidtchen Patentanwälte PartG mbB
(86) International application number: PCT/JP2024/015107
(87) International publication number: WO 2024/225112

(57) **Abstract**

A vehicle drive device (100) includes a rotary electric machine (MG), a power transmission mechanism (GT), an inverter module (INV), a power supply module (PWR), a refrigerant circuit module (2) forming at least a part of a refrigerant circuit that circulates a refrigerant for an on-vehicle air conditioner, and a case (9). The case (9) includes a first accommodation chamber (E1) that accommodates the inverter module (INV), and the second accommodation chamber (E2) that accommodates the rotary electric machine (MG) and the power transmission mechanism (GT). The power supply module (PWR) is accommodated in the first accommodation chamber (E1). The refrigerant circuit module (2) includes an integrated portion that is a portion integrated with the case (9), and the integrated portion includes a component (21) forming a part of the case (9) and a component (V) attached to the case (9).

## Description

### TECHNICAL FIELD

The present invention relates to a vehicle drive device.

### BACKGROUND ART

JP 2019-170077 A discloses a vehicle drive device (1) including a rotary electric machine (rotor (20), stator (30)) serving as a driving force source of wheels (803, 804), a drive control device (131) that controls driving of the rotary electric machine, a charger (136) that charges a battery (805) connected to the rotary electric machine via the drive control device (131) with electric power supplied from an external power supply (900), and a case (10) that accommodates the rotary electric machine, the drive control device (131), and the charger (136) (reference signs in parentheses in the background art are those of the reference literature). In the case (10), a first accommodation chamber in which the rotary electric machine is accommodated is formed on a lower side in an up-down direction (Z) in an on-vehicle posture in which the vehicle drive device (1) is mounted on the vehicle, and a second accommodation chamber in which the drive control device (131) and the charger (136) are accommodated is formed on an upper side. The first accommodation chamber is formed inside a cylindrical peripheral wall portion (10b) of the case (10). The second accommodation chamber is formed as a rectangular box-shaped space inside a rectangular tube portion (10e) in a rectangular tubular shape adjacent to an upper side of the peripheral wall portion (10b) in the up-down direction (Z) on a radially outer side of the peripheral wall portion (10b). In the peripheral wall portion (10b), a cooling unit (60) in which a cooling flow path through which a refrigerant flows along the peripheral wall portion (10b) is further formed.

The cooling flow path formed along the peripheral wall portion (10b) includes an inflow port (16) through which the refrigerant flows in and an outflow port (17) through which the refrigerant flows out on a rectangular tube portion (10e) side. The drive control device (131) is disposed on a side close to the inflow port (16) in the flow path of the refrigerant, that is, on an upstream side of the flow path of the refrigerant, and the charger (136) is disposed on a side close to the outflow port (17) in the flow path of the refrigerant, that is, on a downstream side of the flow path of the refrigerant. As a result, the drive control device (131) that generates heat when driving the rotary electric machine can be efficiently cooled by the cold refrigerant. Since the battery (805) is charged by the external power supply (900) while the vehicle stops, the temperature of the refrigerant is less likely to rise due to heat exchange with the drive control device (131), and the charger (136) is appropriately cooled even when this is disposed on the downstream side of the flow path of the refrigerant. In addition, a reactor (140) and a smoothing capacitor (141) used for improving a power factor of a power system and stabilizing a voltage are also disposed along the flow path of the refrigerant, and are appropriately cooled by the refrigerant.

### CITATIONS LIST

### PATENT LITERATURE

Patent Literature 1: JP 2019-170077 A

### SUMMARY OF INVENTION

### TECHNICAL PROBLEMS

As described above, the vehicle drive device disclosed in the above literature includes a cooling structure capable of efficiently cooling a plurality of cooling targets. However, in the vehicle, there are other devices to be thermally managed, such as an air conditioner. The lighter the weight of the vehicle, the easier it is to increase the energy efficiency of the vehicle, and appropriate heat utilization and waste heat management also contribute to improving the energy efficiency in the vehicle. Therefore, it is preferable to make the vehicle drive device having a relatively large proportion of weight in the on-vehicle devices small, and to more comprehensively perform thermal management of the on-vehicle devices using the vehicle drive device.

In view of the above background, it is desired to provide a technology of appropriately forming a thermal management system in a vehicle using a vehicle drive device as a core and forming a small vehicle drive device.

### SOLUTIONS TO PROBLEMS

A vehicle drive device in consideration of above includes a rotary electric machine including a rotor, an output member drivingly connected to a wheel, a power transmission mechanism that transmits a driving force between the rotary electric machine and the output member, an inverter module for controlling driving of the rotary electric machine, a power supply module including a circuit electrically connected to an on-vehicle battery, a refrigerant circuit module forming at least a part of a refrigerant circuit for circulating a refrigerant for an on-vehicle air conditioner, and a case including a first accommodation chamber that accommodates the inverter module and a second accommodation chamber that accommodates the rotary electric machine and the power transmission mechanism, in which the power supply module is accommodated in the first accommodation chamber, the refrigerant circuit module includes an integrated portion that is a portion integrated with the case, and the integrated portion includes a component forming a part of the case and a component attached to the case.

According to this configuration, the vehicle drive device not only integrally includes the inverter module for controlling driving of the rotary electric machine with the rotary electric machine and the power transmission mechanism, but also integrally includes the power supply module and the refrigerant circuit module for the on-vehicle air conditioner with the rotary electric machine and the power transmission mechanism. Therefore, wiring, piping or the like connecting these elements can be reduced or shortened, and the vehicle drive device can be easily downsized. Furthermore, according to this configuration, not only the rotary electric machine, the power transmission mechanism, and the inverter module but also the power supply module is accommodated in the case, and the refrigerant circuit module includes an integrated portion that is a portion integrated with the case. Therefore, it is possible to implement the integrated vehicle drive device with many functions, and it is easy to downsize the vehicle drive device also from this point. According to this configuration, the thermal management system including the vehicle drive device as a core can be appropriately formed using the components included in the integrated portion of the refrigerant circuit module. In this manner, according to this configuration, it is possible to appropriately form the thermal management system in the vehicle using the vehicle drive device as the core and form the small vehicle drive device.

Further features and advantages of the vehicle drive device will become clear from the following description of exemplary and non-limiting embodiments described with reference to the drawings.

### BRIEF DESCRIPTION OF DRAWINGS

FIG. 1 is an exploded perspective view of a vehicle drive device.
FIG. 2 is a skeleton diagram of the vehicle drive device.
FIG. 3 is a schematic control block diagram of the vehicle drive device.
FIG. 4 is a diagram schematically illustrating a refrigerant circuit and a cooling water circuit.
FIG. 5 is a front view of the vehicle drive device as seen from a front-rear direction first side.
FIG. 6 is a rear view of the vehicle drive device as seen from a front-rear direction second side.
FIG. 7 is a side view of the vehicle drive device as seen from an axial direction second side.
FIG. 8 is a perspective view schematically illustrating an arrangement relationship among a cooling unit, an inverter module, and a power supply module.
FIG. 9 is a diagram schematically illustrating an example of a route of a refrigerant in a refrigerant manifold.
FIG. 10 is a perspective view of a configuration example of a vehicle drive device.
FIG. 11 is an exploded perspective view of a configuration example of the vehicle drive device.
FIG. 12 is a perspective view illustrating a configuration example of the vehicle drive device as seen in a direction different from that of FIG. 10.
FIG. 13 is an exploded perspective view illustrating a configuration example of the vehicle drive device as seen in a direction different from that of FIG. 11.

### DESCRIPTION OF EMBODIMENTS

Hereinafter, an embodiment of a vehicle drive device will be described with reference to the drawings. A vehicle drive device 100 of the present embodiment appropriately forms a thermal management system in a vehicle with the vehicle drive device 100 as a core while suppressing an increase in size. For example, in small vehicles such as A-segment vehicles in Europe or the like, and light vehicles in Japan, it is required to improve mounting efficiency by reducing the size and weight of on-vehicle components including the vehicle drive device 100 as much as possible. For example, it is also preferable to shorten the length of connection components such as wiring and piping by disposing the on-vehicle components close to each other, or to reduce the wiring and piping by integrating different devices.

Heat of cooling water for cooling a device that generates heat in a vehicle such as a driving force source of a wheel is discharged by a radiator, and in general, the radiator is disposed on a frontmost side of the vehicle in order to discharge heat by traveling wind. Small vehicles such as A-segment vehicles are front-wheel-drive vehicles, in many cases, in order to secure a space in the vehicle on which an occupant rides, and the driving force source of a wheel is also disposed on a front side of the vehicle. In a vehicle equipped with an air conditioner that performs cooling, heating or the like, the air conditioner, many portions of a flow path through which a refrigerant used in the air conditioner flows, and functional components that perform heat exchange are also disposed on a front side of the vehicle. In particular, regarding heating, in a conventional vehicle in which an internal combustion engine is used as a driving force source of a wheel, it has been easy to use the internal combustion engine as a heat source; however, in a vehicle such as an electric vehicle that does not have an internal combustion engine, there is no such heat source, a heat pump system is exclusively used for heating, and mounted components tend to increase as compared with a system using waste heat of the internal combustion engine. By appropriately piping and wiring these on-vehicle components in a limited space on the front side of the vehicle, a space that can be used for a vehicle cabin or the like can be widened. In the vehicle drive device 100 of the present embodiment, the functional components that perform the thermal management using the cooling water and the refrigerant are formed integrally with the vehicle drive device 100 in this manner, so that reduction in size, weight, and cost of the vehicle mounted components is comprehensively implemented.

Hereinafter, a preferred embodiment of such vehicle drive device 100 will be described, and first, a function as a drive unit for driving a wheel W will be described.

Note that, in the present specification, an expression "drivingly connected" refers to a state in which two rotating elements are connected so as to be able to transmit a driving force, and includes a state in which the two rotating elements are connected so as to rotate integrally, or a state in which the two rotating elements are connected so as to be able to transmit a driving force via one or two or more transmission members. Examples of such transmission member include various members that transmit rotation at the same speed or at a variable speed, such as a shaft, a gear mechanism, a belt, and a chain, for example. Note that, as the transmission member, an engagement device that selectively transmits rotation and a driving force, for example, a friction engagement device, a meshing engagement device or the like may be included. However, an expression "drivingly connected" regarding a rotating element of a planetary gear mechanism refers to a state in which the rotating elements are drivingly connected without an intervention of another rotating element of the planetary gear mechanism. In the present specification, "rotate integrally" means to rotate integrally regardless of whether it is separable or inseparable. That is, a plurality of members that rotate integrally may be integrally formed of the same member, or may be formed of different members and integrated by welding, spline coupling or the like. In the present specification, regarding arrangement of two elements, "overlap as seen in a specific direction" means that, in a case where a virtual straight line parallel to a line-of-sight direction is moved in each direction orthogonal to the virtual straight line, a region in which the virtual straight line intersects both of the two elements is present at least partially.

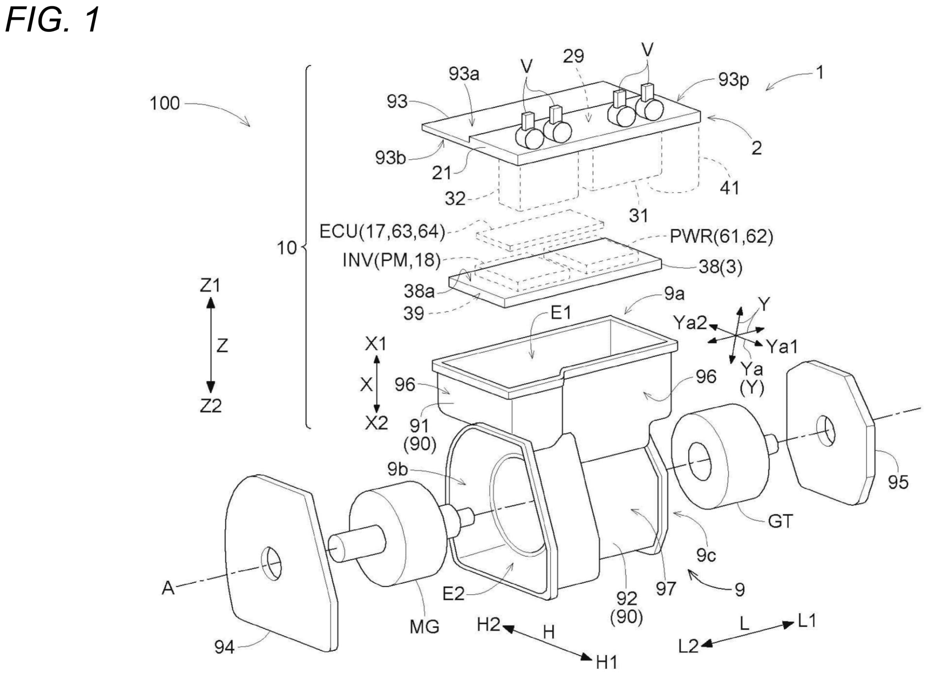

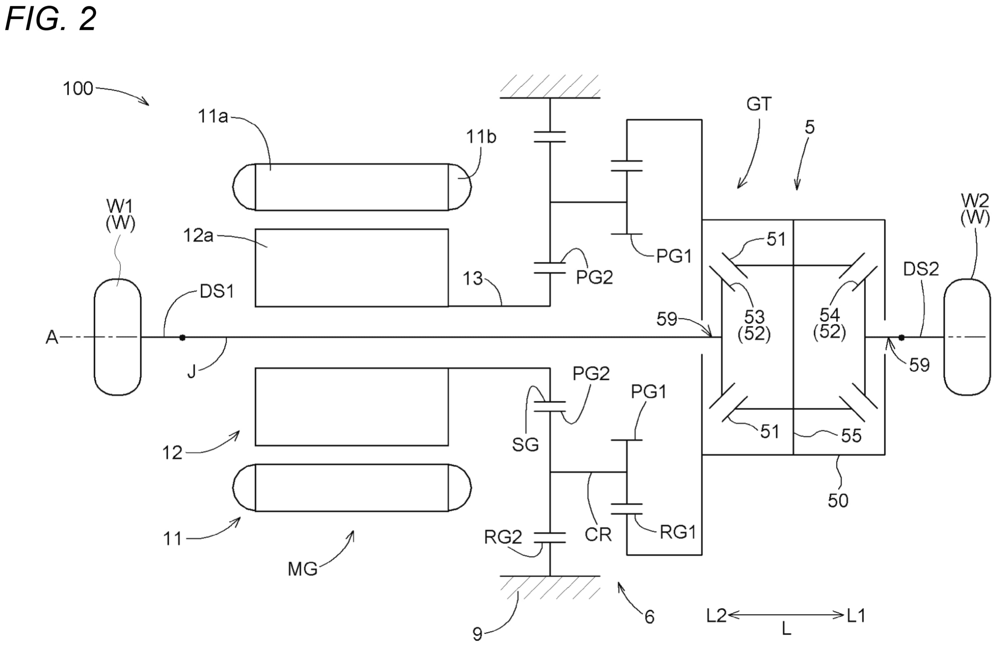

As illustrated in an exploded perspective view of FIG. 1 and a skeleton diagram of FIG. 2, the vehicle drive device 100 includes a rotary electric machine MG including a rotor 12, an output member drivingly connected to the wheel W, and a power transmission mechanism GT that transmits a driving force between the rotary electric machine MG and the output member. As will be described later, a direction along a rotation axis A of the rotor 12 is defined as an axial direction L, and the power transmission mechanism GT is disposed on an axial direction first side L1, which is one side in the axial direction L with respect to the rotor 12. As will be described later in detail, the rotary electric machine MG is a driving force source of the vehicle, and the power transmission mechanism GT includes a reducer 6 and a differential gear mechanism 5. Specifically, the vehicle drive device 100 includes the rotary electric machine MG including the rotor 12, a pair of output members each of which is drivingly connected to the wheel W, the reducer 6 that decelerates rotation of a rotor shaft 13, the differential gear mechanism 5 that distributes a driving force from the rotary electric machine MG transmitted to a differential input element (differential case 50) via the reducer 6 to the pair of output members, and a case 9 that forms an accommodation chamber (a second accommodation chamber E2 to be described later) that accommodates the rotary electric machine MG, the reducer 6, and the differential gear mechanism 5.

The pair of wheels W include a first wheel W1 and a second wheel W2, the first wheel W1 is drivingly connected to a first drive shaft DS1, and the second wheel W2 is drivingly connected to a second drive shaft DS2. In the present embodiment, a pair of side gears 52, which are output gears of the differential gear mechanism 5, include a first side gear 53 and a second side gear 54. The first side gear 53 is drivingly connected to the first drive shaft DS1 via a connection shaft J, and the second side gear 54 is drivingly connected to the second drive shaft DS2. For example, the first side gear 53 and the connection shaft J are connected by spline coupling, and the second side gear 54 and the second drive shaft DS2 are connected by spline coupling, too. These connection units are spline engagement units 59. The output members are, for example, the spline engagement units 59. The output member may be the first side gear 53, the second side gear 54, the first drive shaft DS1, the second drive shaft DS2, and the connection shaft J.

In the following description, a direction along the rotation axis A of the rotor 12 is referred to as an "axial direction L" as described above. One side in the axial direction L is referred to as an "axial direction first side L1", and the other side in the axial direction L is referred to as an "axial direction second side L2". In the present embodiment, the rotary electric machine MG, the reducer 6, and the differential gear mechanism 5 are coaxially arranged from the axial direction second side L2 toward the axial direction first side L1 in the described order. The vehicle drive device 100 of the present embodiment has a single-axis configuration, and an axis (rotation axis A) on which the rotary electric machine MG, the reducer 6, and the differential gear mechanism 5 are arranged is the rotation axis A of the vehicle drive device 100 and also is a rotation axis of the rotary electric machine MG, the reducer 6, and the differential gear mechanism 5. A direction orthogonal to the rotation axis A of the rotor 12 is referred to as a "radial direction". In the radial direction, the rotation axis A side of the rotor 12 is referred to as a "radially inner side", and the opposite side is referred to as a "radially outer side". In a vehicle mounted state in which the vehicle drive device 100 is mounted on a vehicle, a direction in a vertical direction is defined as an "up-down direction Z", an upper side is defined as an "up-down direction Z upper side Z1", and a lower side is defined as an "up-down direction Z lower side Z2". In a case where the vehicle drive device 100 is horizontally mounted on the vehicle, one direction in the radial direction coincides with the up-down direction Z. A direction orthogonal to the axial direction L and the up-down direction Z is referred to as a "front-rear direction H", one side in the front-rear direction H is referred to as a "front-rear direction first side H1", and the other side is referred to as a "front-rear direction second side H2". In the present embodiment, the front-rear direction first side H1 is a front side of the vehicle, and the front-rear direction second side H2 is a rear side of the vehicle.

In the present embodiment, an "opening direction X", an "opening surface direction Y", and a "specific opening surface direction Ya (first direction)" are defined as described later with reference to the vehicle drive device 100 regardless of whether or not the state is the vehicle mounted state. The "opening surface direction Y" is a direction orthogonal to the "opening direction X", and the "specific opening surface direction Ya" is one specific direction in the "opening surface direction Y" and corresponds to the "first direction". In the vehicle mounted state, the "opening direction X" coincides with the "up-down direction Z", and the "specific opening surface direction Ya" coincides with the "front-rear direction H". The "opening direction first side X1", which is one side in the "opening direction X", coincides with the "up-down direction Z upper side Z1", and the "opening direction second side X2", which is the other side, coincides with the "up-down direction Z lower side Z2". A "specific opening surface direction first side Ya1 (first direction first side)", which is one side in the "specific opening surface direction Ya (first direction)", coincides with the "front-rear direction first side H1", and a "specific opening surface direction second side Ya2 (first direction second side)", which is the other side, coincides with the "front-rear direction second side H2". Each direction used in the description in the present specification can be exchanged between the direction in the vehicle mounted state and the direction of the vehicle drive device 100 alone (the direction with reference to the vehicle drive device 100) on the basis of the above.

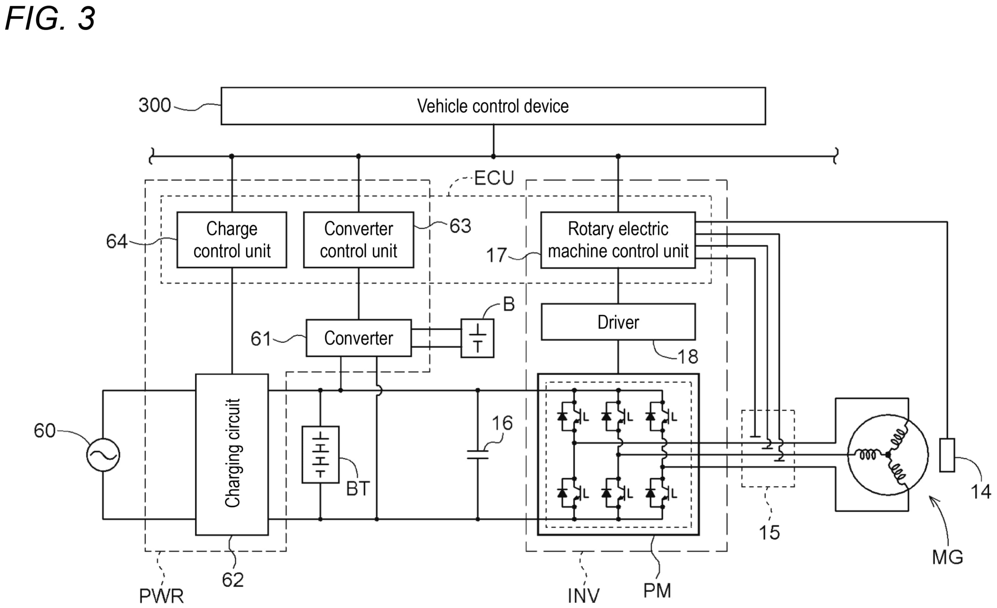

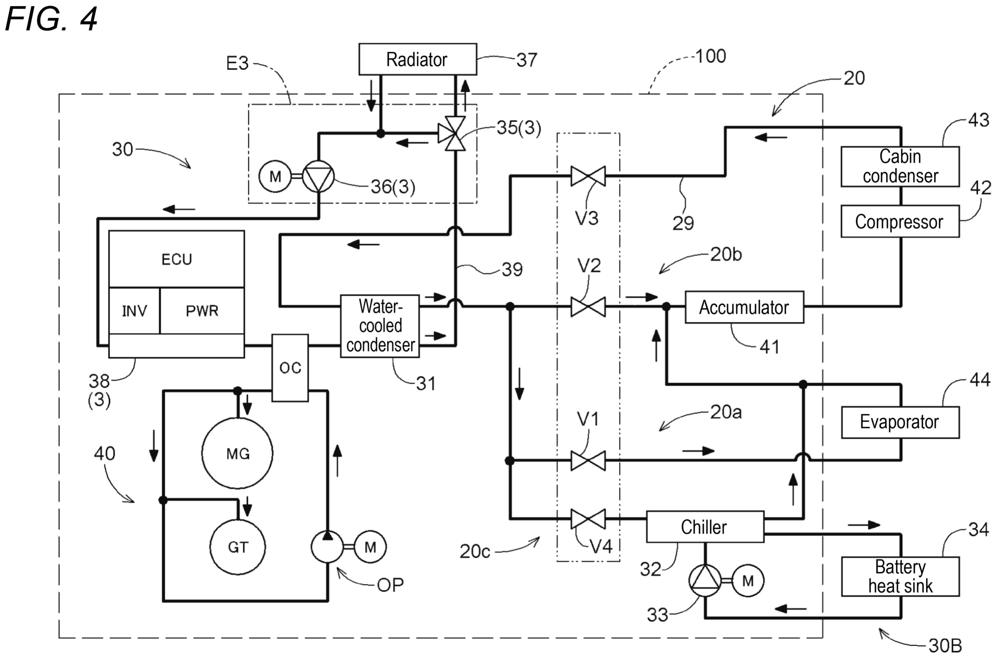

As illustrated in FIGS. 1 and 3, the vehicle drive device 100 further includes an inverter module INV for controlling driving of the rotary electric machine MG, a power supply module PWR including a circuit electrically connected to an on-vehicle battery BT, and a refrigerant circuit module 2 forming at least a part of a refrigerant circuit 20 (refer to FIG. 4) that circulates a refrigerant for an on-vehicle air conditioner. The case 9 includes a first accommodation chamber E1 that accommodates the inverter module INV, and a second accommodation chamber E2 that accommodates the rotary electric machine MG and the power transmission mechanism GT. The power supply module PWR is accommodated in the first accommodation chamber E1. The power supply module PWR includes, as a circuit electrically connected to the on-vehicle battery BT, at least one of a converter 61 (voltage conversion circuit) that performs voltage conversion of the on-vehicle battery BT, an external charging circuit (charging circuit) for charging the on-vehicle battery BT by an external power supply 60, and an external discharging circuit (feeding circuit) for feeding power from the on-vehicle battery BT to the outside. In an example illustrated in FIG. 3, the power supply module PWR includes all of these three circuits. Here, a mode in which the power supply module PWR includes a charging circuit 62 (bidirectional charging circuit) having both functions of the external charging circuit and the external discharging circuit is illustrated.

As illustrated in FIG. 1, the case 9 includes a case body 90, which is a core accommodation member of the first accommodation chamber E1 and the second accommodation chamber E2, and three cover members (first cover 93, second cover 94, and third cover 95). The case body 90 includes a first case portion 91 and a second case portion 92. The first case portion 91 is a portion in which the first accommodation chamber E1 that accommodates the inverter module INV and the power supply module PWR is formed. The second case portion 92 is a portion in which the second accommodation chamber E2 that accommodates the rotary electric machine MG and the power transmission mechanism GT is formed. Regarding the function of the drive unit of the wheel W, the power supply module PWR is not necessarily mounted on the vehicle drive device 100, and in this case, the first case portion 91 can also be referred to as a case that accommodates the inverter module INV.

Note that, in the present embodiment, a mode in which the first case portion 91 and the second case portion 92 are integrally formed of the same material is exemplified, but a structure of the case 9 is not limited thereto. In the case 9, the first case portion 91 and the second case portion 92 may be formed of different members, and may be integrated by a fastening member such as a bolt, welding or the like.

The first case portion 91 is formed in a rectangular box shape in which the up-down direction Z upper side Z1 is opened in the vehicle mounted state. Here, a direction orthogonal to an opening surface of a first opening portion 9a, which is an opening portion of the first case portion 91, is referred to as an "opening direction X". The first case portion 91 includes a peripheral wall portion 96 that surrounds the first opening portion 9a and is disposed so as to extend in the opening direction X that coincides with the up-down direction Z in the vehicle mounted state. The first opening portion 9a is closed by the first cover 93. The first opening portion 9a corresponds to an opening portion of the case 9 (first case portion 91) that accommodates the inverter module INV, and the first cover 93 corresponds to a cover that closes the opening portion (first opening portion 9a). The first accommodation chamber E1 and the second accommodation chamber E2 are arranged side by side in the opening direction X.

The second case portion 92 is formed in a tubular shape with both sides in the axial direction L opened, and includes a cylindrical peripheral wall portion 97. The cylindrical peripheral wall portion 97 surrounds the power transmission mechanism GT from the radially outer side and corresponds to a portion surrounding the second accommodation chamber E2 of the case 9. The opening portion formed on the axial direction second side L2 is a second opening portion 9b, and the opening portion formed on the axial direction first side L1 is a third opening portion 9c. The second opening portion 9b is closed by the second cover 94, and the third opening portion 9c is closed by the third cover 95. A through hole through which the above-described drive shaft (first drive shaft DS1 and second drive shaft DS2) passes is formed in each of the second cover 94 and the third cover 95.

The rotary electric machine MG functions as a driving force source of the pair of wheels W. As illustrated in FIG. 3, the rotary electric machine MG is electrically connected to the on-vehicle battery BT, which is a DC power supply formed of a power storage device such as a secondary battery or a capacitor, via an inverter circuit PM. The rotary electric machine MG has a function as a motor (electric motor) that receives electric power supply from the on-vehicle battery BT and generates power, and a function as a generator (generator) that receives power supply from the wheel W side and generates electric power. The rotary electric machine MG generates a driving force by powering with electric power stored in the on-vehicle battery BT, and generates electric power by the driving force transmitted from the pair of wheels W side to charge the on-vehicle battery BT. The on-vehicle battery BT is a high-voltage DC power supply having a rated voltage of about 48 volts to 400 volts.

Note that, in the present embodiment, the on-vehicle battery BT is configured not only to be charged by the electric power generated by the rotary electric machine MG, but also to be chargeable by the electric power supplied from the external power supply 60 such as a commercial power supply having a rating of about AC 100 volts to 240 volts. Therefore, the on-vehicle battery BT is configured to be connectable to the external power supply 60 via the charging circuit 62. FIG. 3 illustrates a mode in which the external power supply 60 and the charging circuit 62 are connected by wire, for example, by a connector or the like, but the present invention is not limited to such mode. For example, electric power may be contactlessly supplied from the external power supply 60 to the charging circuit 62 by electromagnetic induction or the like. Note that, a charge control unit 64 is provided to control the charging circuit 62. In the present embodiment, the charge control unit 64 is included in the power supply module PWR.

In recent years, it has been proposed to use the on-vehicle battery BT of an electric vehicle or a hybrid electric vehicle as an emergency power supply at the time of disaster or the like. In order to be able to use the on-vehicle battery BT as such emergency power supply, the charging circuit 62 is configured to have the function of the external discharging circuit in addition to the function of the external charging circuit as described above. As a matter of course, in a case where use of such on-vehicle battery BT is not taken into consideration, the charging circuit 62 may be configured to have only the function of the external charging circuit.

In the present embodiment, the on-vehicle battery BT also supplies electric power to a low-voltage DC power supply B having a rated voltage of about 12 volts to 24 volts. The low-voltage DC power supply B serves as a power source for auxiliary machines such as a headlight, a power window, a power steering, an on-vehicle air conditioner, and an electric oil pump of the vehicle, and a power source for various control devices in the vehicle. Conventionally, in a general vehicle, the low-voltage DC power supply B has been charged with electric power generated by an alternator linked with a driving force source (for example, an internal combustion engine) of the vehicle. However, in the present embodiment, the low-voltage DC power supply B is configured to be charged with electric power from the on-vehicle battery BT (high-voltage DC power supply) having a higher voltage and a larger storage amount than those of the low-voltage DC power supply B. As a result, it is not necessary to mount the alternator, and a power loss of the driving force source (the rotary electric machine MG in a case of the present embodiment) of the vehicle due to the driving of the alternator can also be suppressed.

In order to charge the low-voltage DC power supply B with the electric power of the on-vehicle battery BT in this manner, the converter 61 (voltage conversion circuit) that performs voltage conversion of the on-vehicle battery BT is provided. As described above, since the rated voltage of the on-vehicle battery BT is higher than the rated voltage of the low-voltage DC power supply B, the converter 61 is formed of, for example, a step-down DC/DC converter. The DC/DC converter includes a non-insulated type such as a chopper type or a charge pump type, and an insulated type using a transformer. In a case where it is preferable that the circuit supplied with electric power from the on-vehicle battery BT and the circuit supplied with electric power from the low-voltage DC power supply B be electrically insulated, the converter 61 is preferably an insulated type. The insulated DC/DC converter includes a switching element, and the converter 61 is controlled by the converter control unit 63. In the present embodiment, the converter control unit 63 is included in the power supply module PWR.

Note that, some vehicles include an AC power supply socket (AC power supply socket) for supplying electric power to general home electric appliances or the like. Such AC power supply socket is configured to be able to output an alternating current having a rated voltage of 100 volts to 200 volts. AC power supplied from the AC power supply socket is generated from the on-vehicle battery BT using an inverter not illustrated. Such inverter also corresponds to the voltage conversion circuit, and in a case of including the inverter, the inverter and an inverter control unit that controls the inverter can also be included in the power supply module PWR.

As illustrated in FIG. 2, the rotary electric machine MG includes a stator 11 fixed to the case 9 and the rotor 12 connected to the rotor shaft 13 so as to rotate integrally with the rotor shaft 13. The rotary electric machine MG is an inner rotor type rotary electric machine, and the rotor 12 is disposed radially inside the stator 11. The rotary electric machine MG is a rotation magnetic field type rotary electric machine, and the stator 11 includes a stator core 11a and a stator coil 11b wound around the stator core 11a. The rotor 12 includes a rotor core 12a and a permanent magnet not illustrated fixed to the rotor core 12a. The rotor shaft 13 is formed in a tubular shape coaxial with the rotor core 12a, and a sun gear SG of a planetary gear mechanism forming the reducer 6 is disposed on an outer peripheral side on the axial direction first side L1 of the rotor shaft 13 so as to rotate integrally with the rotor shaft 13. As described later, the sun gear SG is an input element of the reducer 6.

As illustrated in FIG. 3, the rotary electric machine MG is driving controlled by a rotary electric machine control unit 17 on the basis of a target torque of the rotary electric machine MG set in accordance with an instruction from a vehicle control device 300, which is a higher-order control device. The rotary electric machine control unit 17 performs switching control on the inverter circuit PM formed of a plurality of switching elements, and causes the inverter circuit PM to convert electric power between a direct current and alternating currents of a plurality of phases (three phases in the present embodiment). An operating voltage of the rotary electric machine control unit 17 is about 3.3 volts to 5 volts, an input/output voltage of the inverter circuit PM is about 48 volts to 400 volts, and a voltage of a switching control signal of the switching element forming the inverter circuit PM is about 15 volts to 24 volts. Therefore, a driver 18 that amplifies the voltage of the switching control signal output from the rotary electric machine control unit 17, increases the driving force, and supplies the same to the inverter circuit PM is provided between the rotary electric machine control unit 17 and the inverter circuit PM.

The inverter circuit PM includes a plurality of switching elements. The inverter circuit PM includes a plurality of sets (here, three sets) of arms for AC one phase formed of a series circuit of an upper-stage side switching element on a positive electrode side and a lower-stage side switching element on a negative electrode side of the direct current. Each switching element is provided with a freewheel diode in which a direction from the negative electrode to the positive electrode (a direction from the lower-stage side to the upper-stage side) is a forward direction. As the switching element, it is preferable to apply a power semiconductor element such as an insulated gate bipolar transistor (IGBT), a power metal oxide semiconductor field effect transistor (MOSFET), a silicon carbide-metal oxide semiconductor FET (SiC-MOSFET), a SiC-static induction transistor (SiC-SIT), or a gallium nitride-MOSFET (GaN-MOSFET). In the present embodiment, the inverter circuit PM is formed as a power module in which the switching elements are integrated together with the freewheel diode.

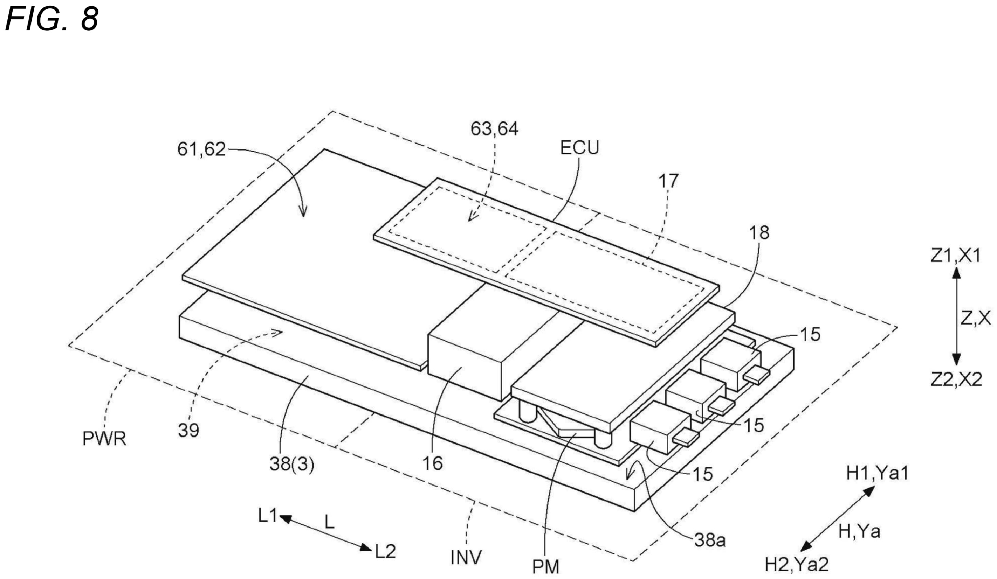

When the rotary electric machine MG is driven, a large current flows through the switching elements forming the inverter circuit PM, and the switching elements generate heat. Therefore, a heat value of the inverter circuit PM including a plurality of switching elements is large. Therefore, in the present embodiment, as illustrated in FIG. 8, a cooling unit 38 that cools the switching element is provided. As described later, a cooling water path 39 through which cooling water circulates is formed in the cooling unit 38. Note that, cooling is not limited to a mode of direct heat exchange between a site to be cooled and the cooling water, and also includes a mode of heat exchange between the site to be cooled and the cooling water via a heat transfer medium such as oil or a heat sink.

The inverter module INV includes at least a switching element forming the inverter circuit PM and the cooling unit 38 that cools the switching element. In the present embodiment, as illustrated in FIG. 3, the inverter module INV further includes the rotary electric machine control unit 17 and the driver 18. That is, in the present embodiment, the inverter module INV includes the rotary electric machine control unit 17, the driver 18, the inverter circuit PM, and the cooling unit 38. As a matter of course, the inverter module INV may be formed of the switching element forming the inverter circuit PM and the cooling unit 38 without including the rotary electric machine control unit 17 and the driver 18.

Note that, as illustrated in FIG. 3, a DC link capacitor 16 (smoothing capacitor) that smooths the voltage on the DC side of the inverter circuit PM is provided on the DC side of the inverter circuit PM, that is, between the inverter circuit PM and the on-vehicle battery BT. The inverter module INV may include the DC link capacitor 16.

The rotary electric machine control unit 17 performs current feedback control on the basis of a rotational position of the rotor 12 (magnetic pole position of the permanent magnet), a rotational speed of the rotor 12, and a current flowing through the stator coil 11b of each of the three phases to control driving of the rotary electric machine MG via the inverter circuit PM. The rotational position of the rotor 12 is detected by a rotation sensor 14 such as a resolver, for example. The current flowing through the stator coil 11b is detected by a current sensor 15. As illustrated in FIG. 8, the current sensor 15 is preferably a contactless current sensor installed in the vicinity of a power line such as a bus bar connecting the inverter circuit PM and the stator coil 11b of the rotary electric machine MG, for example.

The power supply module PWR includes at least the converter 61 (voltage conversion circuit) and the charging circuit 62. In the present embodiment, as illustrated in FIG. 8, the converter 61 and the charging circuit 62 are formed using a common substrate. In the present embodiment, as illustrated in FIG. 3, the power supply module PWR includes the converter 61, the converter control unit 63, the charging circuit 62, and the charge control unit 64.

Note that, in the present embodiment, the rotary electric machine control unit 17 included in the inverter module INV, and the converter control unit 63 and the charge control unit 64 included in the power supply module PWR are formed on one and the same substrate to form a control board ECU. The control board ECU can also be referred to as an integrated control board in which functions of a plurality of control units are integrated.

In the present embodiment, as illustrated in FIG. 8, the inverter circuit PM (switching element), the DC link capacitor 16, the converter 61, and the charging circuit 62 are attached to a cooling unit first surface 38a, which is an upper surface of the cooling unit 38. The DC link capacitor 16 that smooths a DC voltage that generates pulsation generates heat when a current flows in and out. The converter 61 includes a switching element, and the switching element also generates heat by the current flowing during a switching operation. Since a current supplied from the external power supply 60 to charge the on-vehicle battery BT also flows through the charging circuit 62, this generates heat. The cooling unit 38 includes the cooling water path 39 through which the cooling water circulates, and these heat generating members are attached to the cooling unit first surface 38a and are appropriately cooled. Note that, the inverter circuit PM has the highest heat value and has the highest temperature.

For example, the cooling water path 39 is formed in the cooling unit 38 in such a manner that a portion for cooling the inverter circuit PM is on a downstream side, that is, the cooling water flows from the power supply module PWR side to the inverter module INV side. By circulating the cooling water from a region where the heat value is low to a region where the heat value is high, it is possible to appropriately cool a cooling target that generates heat while suppressing a rise in temperature of the cooling water. When the rotary electric machine MG is driven, that is, when the vehicle is traveling, the on-vehicle battery BT is scarcely charged by the external power supply 60. There may be a mode in which power is contactlessly fed from a feeding device installed on a road while the vehicle is traveling on the road, but this is not generally put into practical use. Therefore, when the rotary electric machine MG is driven, the charging circuit 62 often stops. The current flowing when the low-voltage DC power supply B is charged is smaller than the current flowing through the charging circuit 62 when the on-vehicle battery BT is charged, and the heat value is also smaller. Therefore, even when the low-voltage DC power supply B is charged while the rotary electric machine MG is being driven, the heat value of the converter 61 is smaller than that of the charging circuit 62. Therefore, even if the cooling water is circulated in such a route, the inverter circuit PM can be appropriately cooled.

The driver 18 is disposed on the up-down direction Z upper side Z1 (opening direction first side X1) of the inverter circuit PM. The control board ECU is disposed across the rotary electric machine control unit 17, the converter control unit 63, and the charge control unit 64. In general, the control board ECU is disposed in such a manner that the inverter circuit PM, the driver 18, and the rotary electric machine control unit 17 overlap, the converter 61 and the converter control unit 63 overlap, and the charging circuit 62 and the charge control unit 64 overlap as seen in the up-down direction (as seen in the opening direction). In the present embodiment, as illustrated in FIGS. 1, 8 or the like, the power supply module PWR is disposed adjacent to the axial direction first side L1 with respect to the inverter module INV. The control board ECU is disposed across the rotary electric machine control unit 17, the converter control unit 63, and the charge control unit 64 in the axial direction L. As illustrated in FIG. 1, the control board ECU is disposed between the inverter circuit PM (switching element) and the refrigerant circuit module 2 in the up-down direction Z.

As illustrated in FIG. 2, the reducer 6 is formed as the planetary gear mechanism including the input element that rotates integrally with the rotor shaft 13, a fixed element fixed to the case 9, an output element that rotates integrally with the differential input element (differential case 50), and a planetary gear. This planetary gear mechanism is a complex planetary gear mechanism including one sun gear SG, two ring gears (first ring gear RG1 and second ring gear RG2), two planetary gears (first planetary gear PG1 and second planetary gear PG2) that rotate integrally, and a carrier CR that rotatably supports the two planetary gears. In the present embodiment, the first planetary gear PG1 is formed to have a smaller diameter than that of the second planetary gear PG2.

The sun gear SG rotates integrally with the rotor 12 and the rotor shaft 13. The second ring gear RG2 is fixed to the case 9. The first ring gear RG1 is disposed on the axial direction first side L1 with respect to the second ring gear RG2, and is connected to the differential case 50 so as to rotate integrally with the differential case 50. The second planetary gear PG2 meshes with the sun gear SG and the second ring gear RG2, and the first planetary gear PG1 rotates integrally with the second planetary gear PG2 and meshes with the first ring gear RG1. In the present embodiment, the sun gear SG is the input element, the second ring gear RG2 is the fixed element, and the first ring gear RG1 is the output element. The carrier CR is not connected to any rotating element or fixed element.

The differential gear mechanism 5 is a differential gear mechanism of a bevel gear type, and includes a pinion gear 51 and a side gear 52 of a bevel gear type. The pinion gear 51 is supported by the differential case 50 and is rotatably supported by a pinion shaft 55 disposed so as to extend in the radial direction. The pinion shaft 55 rotates integrally with the differential case 50, and the pinion gear 51 is rotatable (rotatable) about the pinion shaft 55 and rotatable (revolvable) about the rotation axis A of the differential case 50. A plurality of pinion shafts 55 are arranged radially (for example, in a cross shape) about the rotation axis A of the differential case 50, and the pinion gear 51 is attached to each of the plurality of pinion shafts 55. The differential case 50 accommodates the pinion gear 51, the side gear 52, and the pinion shaft 55 therein.

The pair of side gears 52 including the first side gear 53 and the second side gear 54 are arranged apart from each other in the axial direction L. The first side gear 53 and the second side gear 54 mesh with each of the plurality of pinion gears 51, and are disposed to rotate about the rotation axis A of the differential case 50. As illustrated in FIG. 2, the first side gear 53 is connected to the connection shaft J that extends in the axial direction L through the inside in the radial direction of the reducer 6 and the rotor shaft 13 in a hollow tubular shape. The connection shaft J is connected so as to rotate integrally with the first drive shaft DS1 drivingly connected to the first wheel W1, which is the wheel W on the axial direction second side L2. Therefore, the first side gear 53 is drivingly connected to the first wheel W1 via the connection shaft J. The second side gear 54 is connected so as to rotate integrally with the second drive shaft DS2 drivingly connected to the second wheel W2, which is the wheel W on the axial direction first side L1.

All the first drive shaft DS1, the second drive shaft DS2, the connection shaft J, the first side gear 53, and the second side gear 54 that are drivingly connected to the wheels W and rotate integrally with the wheels W can be regarded as rotating members corresponding to output members. The first side gear 53 and the second side gear 54 can be referred to as the differential gear mechanism 5 and the output members. Note that, each of the first side gear 53 and the second side gear 54 includes a gear unit meshing with the pinion gear 51 and the spline engagement unit 59 connected to the connection shaft J and the second drive shaft DS2. In a case of considering functionally separately, the gear unit corresponds to the rotating member included in the differential gear mechanism 5, and the spline engagement unit 59 corresponds to the output member.

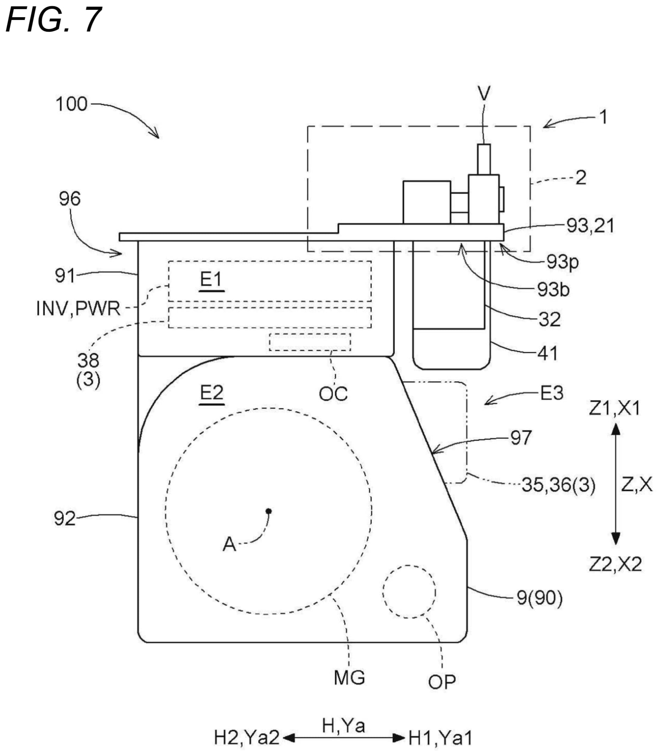

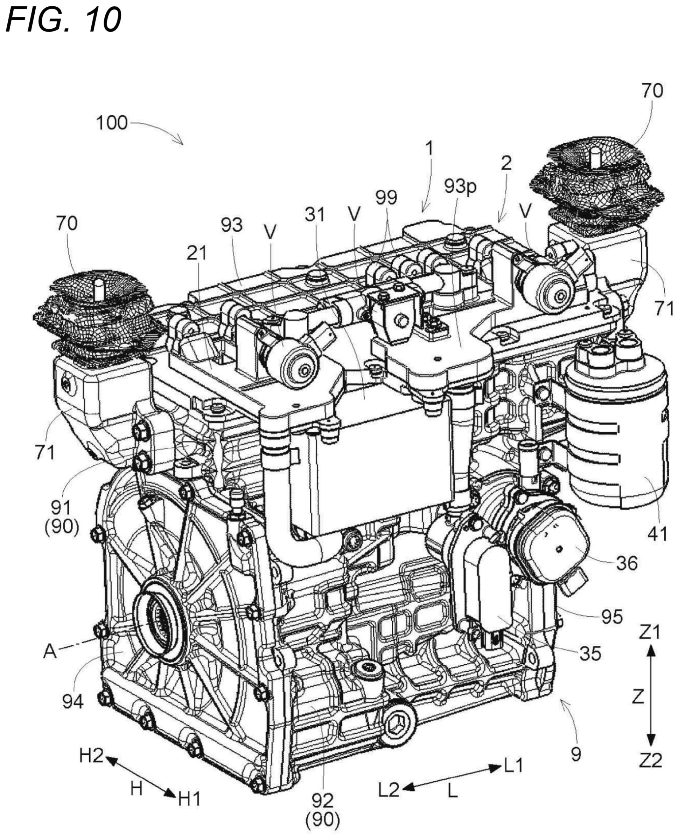

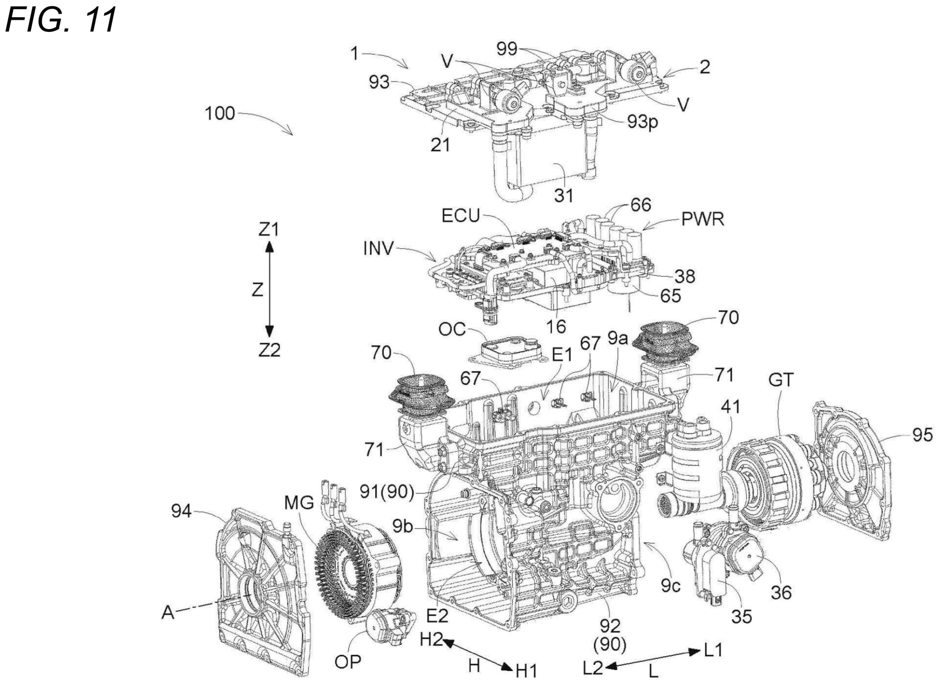

In such vehicle drive device 100, the rotary electric machine MG and the power transmission mechanism GT are often lubricated (including cooled) by oil, and the vehicle drive device 100 of the present embodiment is also lubricated by oil. For example, the oil accumulated in an oil reservoir formed on the lower side Z2 of the case 9 is scraped up by the oil pump OP (refer to FIGS. 4 and 7) or a gear of the power transmission mechanism GT to be supplied to a site to be lubricated such as a bearing and a site to be cooled such as the stator coil 11b of the rotary electric machine MG. The oil flow path 40 illustrated in FIG. 4 exemplifies a mode in which oil discharged from the oil pump OP is supplied to the rotary electric machine MG (bearings or the like of the stator coil 11b and the rotor shaft 13) and the power transmission mechanism GT (bearing or the like of each gear). As a matter of course, since the temperature of the oil used for cooling rises, an oil cooler OC for cooling the oil is also connected to the oil flow path 40. The oil cooler OC cools the oil by heat exchange with the cooling water. The oil cooler OC is a heat exchanger that exchanges heat between the oil accommodated in the second accommodation chamber E2 and the cooling water. As will be described later, in the example illustrated in FIG. 7 and the example illustrated in FIGS. 10 and 11, the oil cooler OC is accommodated in the first accommodation chamber E1. In the present embodiment, the oil cooler OC corresponds to a "second heat exchanger".

As described above, the inverter module INV includes the cooling unit 38 that cools the switching element forming the inverter circuit PM. Therefore, the vehicle drive device 100 includes a cooling water circuit module 3 forming a cooling water circuit 30 that circulates the cooling water in a route passing through the cooling unit 38 and the radiator 37 (on-vehicle radiator). As illustrated in FIG. 4, the radiator 37, a first water pump 36, the cooling unit 38, and a three-way valve 35 are connected to the cooling water circuit 30. The cooling water circuit module 3 includes at least a water path formed in the case 9 and the cooling unit 38. The cooling water circuit module 3 may further include the three-way valve 35 and the first water pump 36. The cooling water cooled (of which heat is radiated) by the radiator 37 is sent to the cooling water circuit 30 by the first water pump 36, takes heat from the inverter module INV and the power supply module PWR in the cooling unit 38, and returns to the radiator 37 through the three-way valve 35 and heat thereof is discharged.

As illustrated in FIG. 4, the above-described oil cooler OC is also connected to the cooling water circuit 30. The oil cooler OC cools the oil flowing through the oil flow path 40 by heat exchange with the cooling water flowing through the cooling water circuit 30. The water-cooled condenser 31 (refrigerant heat exchanger) is also connected to the cooling water circuit 30. The water-cooled condenser 31 exchanges heat between the refrigerant of the on-vehicle air conditioner and the cooling water to cool the refrigerant of which temperature has raised. The water-cooled condenser 31 is a heat exchanger that exchanges heat between cooling water for cooling the inverter module INV and a refrigerant. As illustrated in FIG. 10 or the like, in the present embodiment, the water-cooled condenser 31 is disposed outside the case 9. In the present embodiment, the water-cooled condenser 31 corresponds to a "first heat exchanger".

The cooling water of which temperature has raised through the cooling unit 38, the oil cooler OC, and the water-cooled condenser 31 returns to the radiator 37 through the three-way valve 35 and heat of which is discharged. However, heat radiation by the radiator 37 is not necessary in a case where heat discharge is not required in cold weather or the like, in a case where it is desired to raise the temperature of oil by cooling water conversely, in a case where rapid heating is performed by the on-vehicle air conditioner or the like. In such a case, the three-way valve 35 switches a flow path of the cooling water so as to circulate the cooling water without passing through the radiator 37.

As described above, the water-cooled condenser 31 is connected to the refrigerant circuit 20 through which the refrigerant of the on-vehicle air conditioner flows. In the refrigerant circuit 20, a route (first flow path 20a) from the water-cooled condenser 31 via a first valve V1 through the evaporator 44 to the accumulator 41, and a route (second flow path 20b) from the water-cooled condenser 31 via a second valve V2 to the accumulator 41 and thereafter returning to the water-cooled condenser 31 through the compressor 42 and the cabin condenser 43 and via a third valve V3 are formed.

The evaporator 44 is a functional component serving as a core of cooling, and removes heat from the surroundings by vaporizing the refrigerant to release cool air into the vehicle cabin. The accumulator 41 separates liquid from the refrigerant in which gas and liquid are mixed, and supplies only gas (refrigerant gas) to the compressor 42. The compressor 42 compresses a refrigerant gas having a relatively low temperature and a relatively low pressure to implement a high temperature and a high pressure. The cabin condenser 43 is a heat source for heating by a heat pump system, and releases heat condensed by the compressor 42 into the vehicle cabin. The refrigerant that exits the cabin condenser 43 flows to the water-cooled condenser 31 via the third valve V3, which is an expansion valve.

In the present embodiment, a battery heat sink 34 also cools the on-vehicle battery BT by heat exchange with the cooling water, and the cooling water of which temperature has risen is cooled by heat exchange with the refrigerant in a chiller 32. Therefore, a third flow path 20c is formed as a route through which the refrigerant reaches the accumulator 41 from the water-cooled condenser 31 via a fourth valve V4 and the chiller 32.

To the chiller 32, a second cooling water circuit 30B through which the cooling water output from the chiller 32 returns to the chiller 32 through the battery heat sink 34 and the second water pump 33. Similarly to the water-cooled condenser 31, the chiller 32 exchanges heat between the cooling water and the refrigerant, and cools the cooling water by taking heat from the cooling water. The cooling water of which temperature has risen due to heat exchange with the battery heat sink 34 is cooled in the chiller 32. By providing the second cooling water circuit 30B for cooling the on-vehicle battery BT and the third flow path 20c for cooling the cooling water flowing through the second cooling water circuit 30B, even in a case where the current flowing through the on-vehicle battery BT increases and the temperature of the on-vehicle battery BT rises, such as during rapid charging or high speed traveling, restriction of an input/output current to/from the on-vehicle battery BT can be easily alleviated.

As described above, the refrigerant circuit 20 includes the first flow path 20a including a flow path of the refrigerant from the water-cooled condenser 31 (refrigerant heat exchanger) to the evaporator 44, the second flow path 20b including a flow path of the refrigerant from the compressor 42 to the water-cooled condenser 31, and the third flow path 20c including a flow path of the refrigerant including the chiller 32. The refrigerant flowing through the first flow path 20a is lower in temperature than that in the second flow path 20b and the third flow path 20c. The refrigerant flowing through the third flow path 20c is lower in temperature than that in the second flow path 20b.

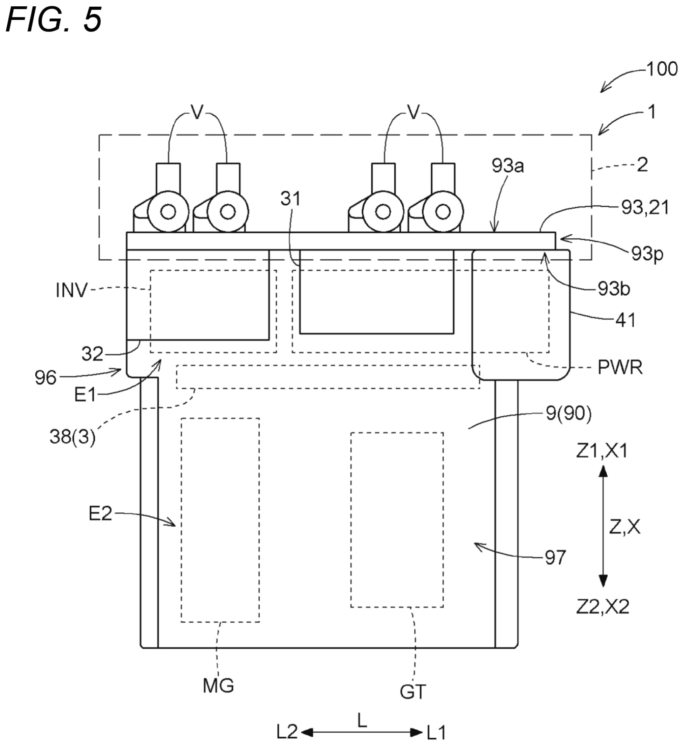

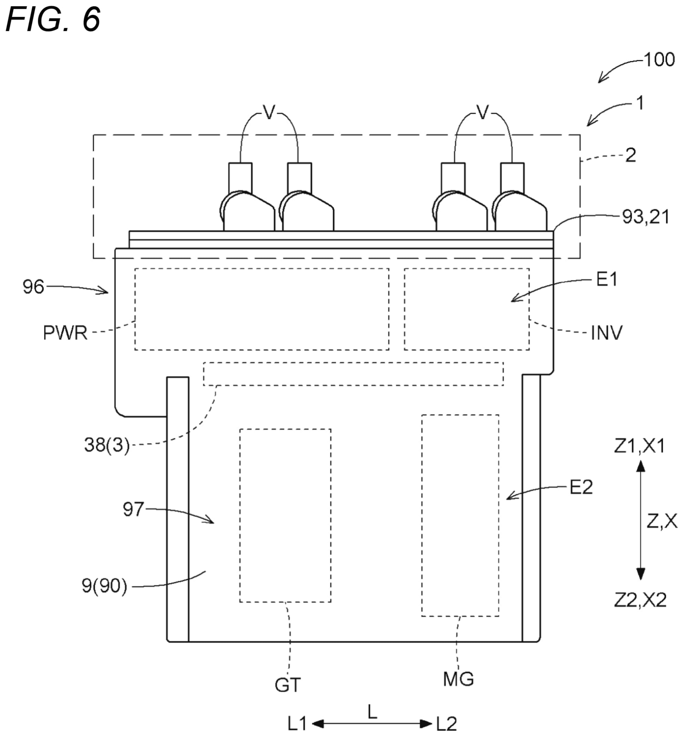

In the present embodiment, a part of the flow path forming the refrigerant circuit 20 is formed using the first cover 93 of the case 9. As illustrated in FIGS. 1, 5 or the like, a control valve V (first valve V1, second valve V2, third valve V3, and fourth valve V4) that controls a flow rate or a flow path of the refrigerant in the refrigerant circuit 20 is attached to a first cover first surface 93a that is a surface facing a side opposite to the opening direction second side X2 (opening direction case side) of the first cover 93 (opening direction first side X1 (opening direction opposite to case side)). As illustrated in FIGS. 1 and 5 to 7, the refrigerant circuit module 2 includes the refrigerant circuit 20 and the control valve V formed on the first cover 93. A portion of the first cover 93 in which the refrigerant circuit 20 is formed is referred to as a refrigerant manifold 21.

In this manner, the refrigerant circuit module 2 includes an integrated portion that is a portion integrated with the case 9, and the integrated portion includes a component forming a part of the case 9 and a component attached to the case 9. Here, the refrigerant manifold 21 and the control valve V integrated with the case 9 (specifically, the first cover 93) correspond to the "integrated portion". The refrigerant manifold 21 is the component forming a part of the case 9 (specifically, the first cover 93), and the control valve V is the component attached to the case 9 (specifically, the first cover 93).

The water-cooled condenser 31, the chiller 32, and the accumulator 41 as functional components forming the flow path of the refrigerant in the refrigerant circuit 20 are attached to the refrigerant circuit module 2. The refrigerant circuit module 2 and these functional components together form a refrigerant module 1. Note that, in a case where the on-vehicle battery BT is not cooled using the cooling water, that is, in a case where the third flow path 20c is not formed, the chiller 32 is not required to be provided. Therefore, the refrigerant circuit module 2, the water-cooled condenser 31, and the accumulator 41 may form the refrigerant module 1. Note that, the refrigerant circuit module 2 only needs to form at least a part of the refrigerant circuit 20 that circulates the refrigerant for the on-vehicle air conditioner. In addition to the refrigerant manifold 21, at least a part of the water-cooled condenser 31, the chiller 32, and the accumulator 41 may be included in the refrigerant circuit module 2 in addition to the control valve V.

Note that, a refrigerant path component includes the control valve V and the functional component, and the functional component includes the water-cooled condenser 31, the chiller 32, and the accumulator 41. In the present embodiment, although not included in the refrigerant module 1, the compressor 42, the cabin condenser 43, the evaporator 44, and the battery heat sink 34 are also functional components. The second water pump 33 is also a functional component, and, for example, as illustrated in FIG. 4, in a case where the second water pump 33 is also provided integrally with the vehicle drive device 100, the second water pump 33 can be included in the refrigerant module 1. As illustrated in FIGS. 1, 5 to 7, and 9, the accumulator 41 is included in the refrigerant module 1 in a case of being attached to the first cover 93, but the accumulator 41 may be disposed separately from the vehicle drive device 100 and not included in the refrigerant module 1.

Among the functional components exemplified above, at least the water-cooled condenser 31 corresponds to a specific functional component included in the refrigerant module 1. The chiller 32 and the accumulator 41, which might form the refrigerant module 1 together with the water-cooled condenser 31, also correspond to a specific functional component depending on an aspect.

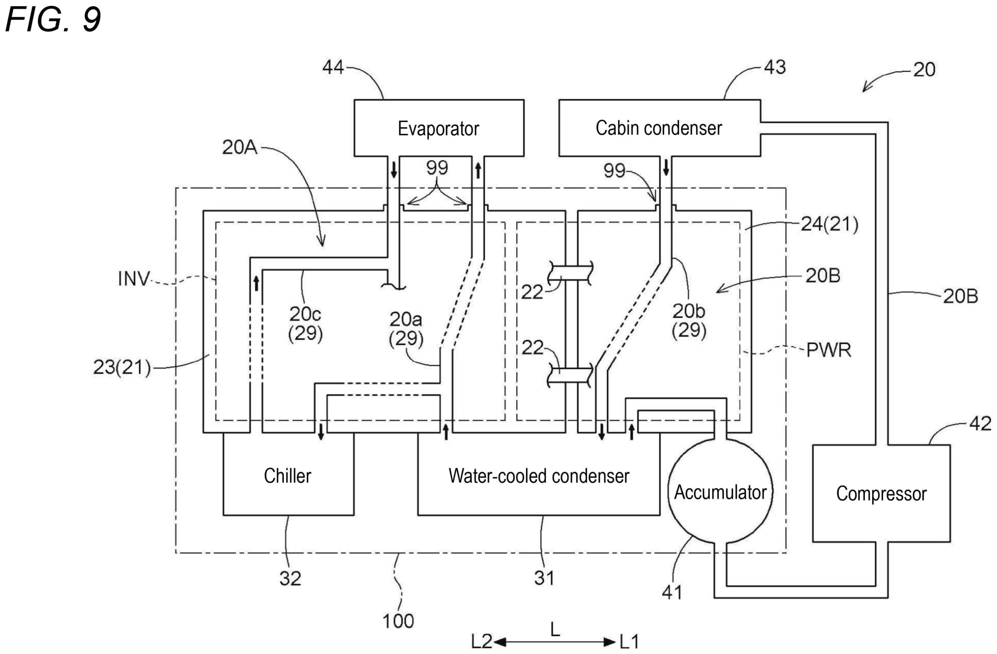

As illustrated in FIG. 9, the refrigerant manifold 21 is divided into a first manifold 23 and a second manifold 24. The first manifold 23 and the second manifold 24 are configured to be connectable via a communication flow path 22. As described above, the refrigerant circuit 20 includes the first flow path 20a through which a relatively low-temperature refrigerant flows and the second flow path 20b through which a relatively high-temperature refrigerant flows. The first flow path 20a that is the flow path of the refrigerant from the water-cooled condenser 31 to the evaporator 44 is formed mainly in the first manifold 23. The second flow path 20b that is the flow path of the refrigerant from the compressor 42 to the water-cooled condenser 31 is formed mainly in the second manifold 24. The first manifold 23 corresponds to a first flow path region 20A of the refrigerant circuit 20, and the second manifold 24 corresponds to a second flow path region 20B of the refrigerant circuit 20.

Note that, the refrigerant manifold 21 is provided with a connection 99 of piping (refer also to FIGS. 10 to 13) that connects the refrigerant manifold 21 and functional components such as the evaporator 44 and the cabin condenser 43 that are not integrated with the vehicle drive device 100. Preferably, similarly to the control valve V, the connection 99 is preferably formed on the first cover first surface 93a, which is a surface facing the opening direction first side X1 of the first cover 93 (side opposite to the opening direction case side).

FIG. 9 illustrates a mode in which the third flow path 20c is formed in the first manifold 23. However, in a case where at least a part of the third flow path 20c is formed in the refrigerant manifold 21, the third flow path 20c may be formed in either the first manifold 23 or the second manifold 24. As a matter of course, the third flow path 20c may be formed across both the first manifold 23 and the second manifold 24.

In the present embodiment, the first accommodation chamber El and the second accommodation chamber E2 are formed using the case body 90, which is one member. However, for example, the first case body forming the first accommodation chamber E1 and the second case body forming the second accommodation chamber E2 may be formed of different members, and the first case body and the second case body may be connected and the case 9 including the first accommodation chamber E1 and the second accommodation chamber E2 may be formed. The first cover 93 is a cover that closes the first accommodation chamber E1 that accommodates the inverter module INV, and the refrigerant circuit module 2 is formed by using the first cover 93 as the refrigerant manifold 21 and attaching the control valve V to the first cover 93. A plurality of refrigerant path components (control valve V, functional component) are attached to the first cover 93 to form the refrigerant module 1. Therefore, it can also be said that the on-vehicle inverter unit 10 includes the inverter module INV, the case 9 (first case portion 91) that accommodates the inverter module INV, the cover (first cover 93) that closes the opening portion (first opening portion 9a) of the case 9, and the refrigerant module 1 forming the refrigerant circuit 20 that circulates the refrigerant for the on-vehicle air conditioner.

As described above, the refrigerant module 1 includes the refrigerant flow path 29 (refer to FIG. 4), which is a flow path of the refrigerant in the refrigerant circuit 20, and the plurality of functional components connected to each other by the refrigerant flow path 29 to form the refrigerant circuit 20. The refrigerant flow path 29 is formed inside the first cover 93. As illustrated in FIGS. 1 and 7, the first cover 93 includes a protrusion 93p protruding to any side in a direction (opening surface direction Y) along the opening surface of the first opening portion 9a with respect to the case 9. As illustrated in FIGS. 1, 5, 7 or the like, a specific functional component that is at least a part of the plurality of functional components is attached to a first cover second surface 93b (surface facing the opening direction case side of the first cover 93) of the protrusion 93p and connected to the refrigerant flow path 29. Note that, the power supply module PWR may be accommodated in the first accommodation chamber E1 or not.

According to the present embodiment, the refrigerant module 1 can be provided integrally with the inverter module INV, and the case 9 and the first cover 93 for accommodating the inverter module INV. That is, the inverter module INV and the refrigerant module 1 can be integrated. Therefore, as compared with a case where the inverter module INV and the refrigerant module 1 are independent from each other, the number of components can be easily reduced, and the on-vehicle inverter unit 10 can be easily mounted on a relatively small vehicle. The specific functional component of the refrigerant module 1 is attached to the first cover second surface 93b. As a result, the specific functional component is arranged side by side with the first accommodation chamber E1 outside the first accommodation chamber E1 in the case 9. Therefore, the inverter module INV and the refrigerant module 1 can be appropriately disposed separately inside and outside the first accommodation chamber E1 while integrating them. Furthermore, the specific functional component of the refrigerant module 1, the case 9, and the inverter module INV can be disposed on the same side (opening direction second side X2 (opening direction case side)) with respect to the first cover 93. Therefore, it is possible to suppress an increase in size of the on-vehicle inverter unit 10 while integrating the inverter module INV and the refrigerant module 1.

As described above, the first case portion 91 of the case 9 includes the peripheral wall portion 96 that surrounds the first opening portion 9a (opening portion of the case) and is disposed so as to extend in the opening direction X. In the present embodiment, as illustrated in FIGS. 1, 7 or the like, assuming that a specific direction in the opening surface direction Y, which is the direction along the opening surface of the first opening portion 9a, is the specific opening surface direction Ya (first direction), the protrusion 93p protrudes from the case 9 toward the specific opening surface direction first side Ya1 (first direction first side), which is one side in the specific opening surface direction Ya (first direction). The specific functional component is disposed at a position overlapping the peripheral wall portion 96 as seen in the specific opening surface direction (first direction) along the specific opening surface direction Ya (first direction).

Note that, in a case where there are a plurality of specific functional components, all the specific functional components are disposed at positions overlapping the peripheral wall portion 96 as seen in the specific opening surface direction. For example, as illustrated in FIGS. 1, 5 or the like, in a case where the water-cooled condenser 31, the accumulator 41, and the chiller 32 are included as the specific functional component, all of the water-cooled condenser 31, the accumulator 41, and the chiller 32 are disposed at positions overlapping the peripheral wall portion 96 as seen in the specific opening surface direction.

The peripheral wall portion 96 surrounding the first opening portion 9a (opening portion) overlaps an accommodation section in which the inverter module INV is accommodated in the case 9 as seen in the specific opening surface direction (as seen in the first direction). Since the inverter module INV is accommodated in the accommodation space, the specific functional component of the refrigerant module 1, the case 9, and the inverter module INV can be disposed so as to overlap each other as seen in the specific opening surface direction (as seen in the first direction). Therefore, it is easy to suppress an increase in size of the on-vehicle inverter unit 10, for example, in the opening direction X, or in a direction (here, the axial direction L) orthogonal to the opening direction X and the specific opening surface direction Ya (first direction). That is, according to this configuration, it is possible to suppress an increase in size of the on-vehicle inverter unit 10 while integrating the inverter module INV and the refrigerant module 1.

The vehicle drive device 100 of the present embodiment may include the on-vehicle inverter unit 10, the rotary electric machine MG, the output member drivingly connected to the wheel W, and the power transmission mechanism GT that transmits the driving force between the rotary electric machine MG and the output member. As described above, the case 9 includes the first accommodation chamber E1 that accommodates the inverter module INV, and the second accommodation chamber E2 that accommodates the rotary electric machine MG and the power transmission mechanism GT. As illustrated in FIGS. 1 and 5 to 7, the first accommodation chamber E1 and the second accommodation chamber E2 are arranged side by side in the opening direction X. As illustrated in FIGS. 1 and 7, the specific functional component is disposed at a position overlapping the cylindrical peripheral wall portion 97 that is a portion surrounding the second accommodation chamber E2 of the case 9 as seen in the opening direction in the opening direction X.

The specific functional component is attached to the surface (first cover second surface 93b) facing the opening direction case side of the protrusion 93p of the first cover 93 (cover). In a case where the specific functional component and a portion (the cylindrical peripheral wall portion 97) surrounding the second accommodation chamber E2 of the case 9 do not overlap each other as seen in the opening direction, the protrusion 93p and the specific functional component protrude in the direction in which the protrusion 93p protrudes with respect to the portion (the cylindrical peripheral wall portion 97) surrounding the second accommodation chamber E2 of the case 9. That is, the vehicle drive device 100 in a state in which the specific functional component is attached to an outer shape of the case 9 tends to be large in the direction in which the protrusion 93p protrudes. According to this configuration, since the specific functional component and the portion (the cylindrical peripheral wall portion 97) surrounding the second accommodation chamber E2 of the case 9 overlap each other as seen in the opening direction, it is easy to downsize the vehicle drive device 100 as seen in the opening direction as compared with a case where they do not overlap each other.

As illustrated in FIGS. 1 and 7, the cylindrical peripheral wall portion 97, which is the portion surrounding the second accommodation chamber E2 in the second case portion 92, bulges toward the specific opening surface direction first side Ya1 (first direction first side) with respect to the first case portion 91 (the peripheral wall portion 96 of the first case portion 91). Therefore, in a case where a virtual rectangular parallelepiped circumscribing the vehicle drive device 100 is considered, an out-of-case arrangement region E3 surrounded by the surface of the rectangular parallelepiped, the specific functional component, and the cylindrical peripheral wall portion 97 is formed between the protrusion 93p and the cylindrical peripheral wall portion 97 and at least between the specific functional component and the cylindrical peripheral wall portion 97. By including the three-way valve 35 and the first water pump 36 in the out-of-case arrangement region E3, for example, many components of the cooling water circuit module 3 described above can be integrated with the vehicle drive device 100.

The oil pump OP and the oil cooler OC may be disposed in the out-of-case arrangement region E3 in place of the three-way valve 35 and the first water pump 36, or in addition to the three-way valve 35 and the first water pump 36. In a case where the oil pump OP is disposed in the case 9, it is possible that only the oil cooler OC is disposed in the out-of-case arrangement region E3.

In the example illustrated in FIG. 7 and the examples illustrated in FIGS. 10 and 11, the three-way valve 35 and the first water pump 36 are attached to the outer surface of the second case portion 92 (specifically, the cylindrical peripheral wall portion 97) on the front-rear direction first side H1. That is, the three-way valve 35 and the first water pump 36 are disposed between the second case portion 92 and the radiator 37 in the front-rear direction H. In these examples, the oil pump OP and the oil cooler OC are disposed in the case 9. Specifically, the oil pump OP is accommodated in the second accommodation chamber E2. Here, the oil pump OP is disposed on the front-rear direction first side H1 and on a lower side Z2 with respect to the rotation axis A. The oil pump OP is disposed at a position overlapping the protrusion 93p as seen in the up-down direction. The oil cooler OC is accommodated in the first accommodation chamber E1. Here, the oil cooler OC is disposed between the inverter module INV and the rotary electric machine MG in the up-down direction Z, more specifically, between the cooling unit 38 and the rotary electric machine MG in the up-down direction Z.

The vehicle drive device 100 of the present embodiment further includes the oil cooler OC for cooling the oil accommodated in the second accommodation chamber E2, and the cooling water circuit module 3 forming the cooling water circuit 30 for circulating the cooling water in a route passing through the oil cooler OC and the radiator 37. The present embodiment exemplifies a mode in which the three-way valve 35, the first water pump 36, and the cooling unit 38 form the cooling water circuit module 3. However, the cooling water circuit module 3 may be formed without passing through the cooling unit 38. The specific functional component includes the water-cooled condenser 31 that is the refrigerant heat exchanger for cooling the refrigerant by heat exchange between the refrigerant for the on-vehicle air conditioner and the cooling water.

With such configuration, the refrigerant for the on-vehicle air conditioner flowing through the refrigerant circuit 20 can be cooled by the cooling water. Since the cooling water circulates in a route passing through the radiator 37 (on-vehicle radiator), the heat of the refrigerant for the on-vehicle air conditioner can be discharged out of the vehicle by the radiator 37. According to this configuration, such water-cooled condenser 31 (refrigerant heat exchanger) is integrally fixed to the case 9 via the refrigerant path component. Accordingly, the piping or the like connecting the functional components forming the refrigerant circuit 20 can be reduced or shortened.

As described above, the functional component includes the control valve V that controls the flow rate or the flow path of the refrigerant in the refrigerant circuit 20. The specific functional component may include the accumulator 41 for separating the refrigerant into liquid and gas. The control valve V is attached to the surface (first cover first surface 93a) facing a side opposite to the opening direction second side X2 (opening direction case side) of the first cover 93 (cover). The water-cooled condenser 31 (refrigerant heat exchanger) and the accumulator 41 are arranged side by side along a wall portion (peripheral wall portion 96) surrounding the first accommodation chamber E1 of the case 9.

By attaching the control valve V to the surface (first cover first surface 93a) facing the side opposite to the opening direction second side X2 (opening direction case side) of the first cover 93 (cover), for example, the control valve V and the specific functional component can be disposed relatively close to each other with the first cover 93 (cover) interposed therebetween. By arranging the plurality of specific functional components along the wall portion (peripheral wall portion 96), the plurality of specific functional components can be efficiently arranged. Therefore, according to this configuration, it is possible to appropriately arrange the plurality of functional components of the refrigerant module 1 while suppressing an increase in size of the vehicle drive device 100.

As described above, in the present embodiment, the power supply module PWR including the circuit electrically connected to the on-vehicle battery BT is also accommodated in the first accommodation chamber E1 together with the inverter module INV. In this case, the on-vehicle inverter unit 10 described above may include the power supply module PWR.

That is, the vehicle drive device 100 includes the rotary electric machine MG including the rotor 12, the output member drivingly connected to the wheel W, the power transmission mechanism GT that transmits the driving force between the rotary electric machine MG and the output member, the inverter module INV for controlling driving of the rotary electric machine MG, the power supply module PWR including the circuit electrically connected to the on-vehicle battery BT, the refrigerant circuit module 2 forming at least a part of the refrigerant circuit 20 for circulating the refrigerant for the on-vehicle air conditioner, and the case 9 including the first accommodation chamber E1 that accommodates the inverter module INV and the power supply module PWR and the second accommodation chamber E2 that accommodates the rotary electric machine MG and the power transmission mechanism GT. As illustrated in FIGS. 1 and 2, the power transmission mechanism GT is disposed on the axial direction first side L1 with respect to the rotor 12. The inverter module INV includes the switching element forming the inverter circuit PM and the cooling unit 38 that cools the switching element.

As illustrated in FIGS. 1, 5, 6 or the like, the inverter module INV is disposed on the upper side Z1 of the rotary electric machine MG and at a position overlapping the rotary electric machine MG as seen in the up-down direction in the up-down direction Z. As illustrated in FIGS. 1, 5, 6, 8. 9 or the like, the power supply module PWR is disposed adjacent to the axial direction first side L1 with respect to the inverter module INV. As illustrated in FIGS. 1, 5, 6, and 7, the refrigerant circuit module 2 is disposed on the upper side Z1 in the up-down direction Z with respect to the inverter module INV and the power supply module PWR, at a position overlapping the inverter module INV and the power supply module PWR as seen in the up-down direction. As illustrated in FIGS. 5 to 7 or the like, the refrigerant circuit module 2 is integrally fixed to case 9.

Note that, as illustrated in FIGS. 1, 5, 6 or the like, the power supply module PWR is disposed on the upper side Z1 of the power transmission mechanism GT, at a position overlapping the power transmission mechanism GT as seen in the up-down direction in the up-down direction Z.

In the present embodiment, the vehicle drive device 100 not only integrally includes the inverter module INV for controlling driving of the rotary electric machine MG with the drive unit including the rotary electric machine MG and the power transmission mechanism GT, but also integrally includes the power supply module PWR and the refrigerant circuit module 2 for the on-vehicle air conditioner with the drive unit. Therefore, the wiring, piping or the like connecting the drive unit and the inverter module INV to the power supply module PWR and the refrigerant circuit module 2 can be reduced or shortened, and the case 9 accommodating or supporting them is integrated, so that it is easy to downsize the entire vehicle drive device 100 having many functions. According to this configuration, the inverter module INV including the cooling unit 38 is disposed on the upper side Z1 of the rotary electric machine MG having a large heat value because of a large current flowing through the stator coil 11b, and the power supply module PWR is adjacently disposed on the axial direction first side L1 with respect to the inverter module INV, that is, on the side on which the power transmission mechanism GT is disposed with respect to the rotary electric machine MG. The refrigerant circuit module 2 is disposed on the upper side Z1 with respect to the inverter module INV and the power supply module PWR, and the transfer of the heat generated by the rotary electric machine MG to the refrigerant circuit module 2 is inhibited by the inverter module INV including the cooling unit 38 and the power supply module PWR. Therefore, it is easy to reduce an influence of the heat generation of the rotary electric machine MG on the refrigerant circuit module 2. Therefore, it is easy to appropriately form the thermal management system in the vehicle with the vehicle drive device 100 as a core.

As illustrated in FIG. 4, the vehicle drive device 100 includes the oil cooler OC for cooling the oil accommodated in the second accommodation chamber E2, and the cooling water circuit module 3 forming the cooling water circuit 30 for circulating the cooling water in the route passing through the oil cooler OC and the radiator 37 (on-vehicle radiator). The refrigerant circuit module 2 includes the refrigerant manifold 21 (refrigerant path component) forming the flow path of the refrigerant in the refrigerant circuit 20, and the control valve V attached to the refrigerant manifold 21. To the refrigerant manifold 21, the water-cooled condenser 31 (refrigerant heat exchanger) for cooling the refrigerant by heat exchange between the refrigerant and the cooling water is further attached as the functional component forming the refrigerant circuit 20.

According to this configuration, the refrigerant for the on-vehicle air conditioner flowing through the refrigerant circuit 20 can be cooled by the cooling water. Since the cooling water circulates in a route passing through the radiator 37 (on-vehicle radiator), the heat of the refrigerant for the on-vehicle air conditioner can be discharged out of the vehicle by the radiator 37. According to this configuration, such water-cooled condenser 31 (refrigerant heat exchanger) is integrally fixed to the case 9 via the refrigerant manifold 21 (refrigerant path component). Accordingly, the piping or the like connecting the functional components forming the refrigerant circuit 20 can be reduced or shortened.

As described above with reference to FIGS. 4 and 9, in the present embodiment, the refrigerant circuit 20 includes the first flow path region 20A, which is the flow path of the refrigerant from the water-cooled condenser 31 (refrigerant heat exchanger) to the evaporator 44, and the second flow path region 20B, which is the flow path of the refrigerant from the compressor 42 to the water-cooled condenser 31 (refrigerant heat exchanger). The first flow path region 20A is disposed so as to overlap the inverter module INV as seen in the up-down direction, and the second flow path region 20B is disposed so as to overlap the power supply module PWR as seen in the up-down direction.

Since a large current flows through the switching element forming the inverter circuit PM, this easily generates heat. Therefore, in consideration of heat radiation, it is preferable that the temperature in the vicinity of the switching element do not rise. In a case where the inverter module INV includes a control circuit (rotary electric machine control unit 17, driver 18: refer to FIG. 3) that controls the inverter circuit PM, electronic components forming the control circuit are often relatively vulnerable to heat. Therefore, it is preferable that the temperature in the vicinity of the control circuit do not increase. According to this configuration, the first flow path region 20A at relatively low temperature in the refrigerant circuit 20 is disposed at a position close to the inverter module INV, and the second flow path region 20B at relatively high temperature in the refrigerant circuit 20 is disposed at a position close to the power supply module PWR. Therefore, it becomes possible to make the heat from the refrigerant circuit module 2 less likely to be transferred to the switching element forming the inverter circuit PM and the control circuit of the inverter circuit PM in the inverter module INV.

As described above with reference to FIG. 4, the refrigerant circuit 20 includes the accumulator 41 for separating the refrigerant into liquid and gas. As illustrated in FIGS. 1, 7, 9 or the like, the water-cooled condenser 31 (refrigerant heat exchanger) and the accumulator 41 are disposed at positions not overlapping the inverter module INV and the power supply module PWR as seen in the up-down direction at which an arrangement region in the up-down direction Z overlaps the inverter module INV and the power supply module PWR as illustrated in FIG. 7.

Among the components forming the refrigerant circuit 20, the water-cooled condenser 31 (refrigerant heat exchanger) and the accumulator 41 tend to be relatively large. According to this configuration, such water-cooled condenser 31 (refrigerant heat exchanger) and the accumulator 41 can be arranged side by side with the inverter module INV and the power supply module PWR in a horizontal direction (here, the front-rear direction H). Therefore, it is easy to downsize the vehicle drive device 100 in the up-down direction Z.

Note that, as described above with reference to FIG. 4, in the present embodiment, the refrigerant circuit 20 includes the chiller 32 that is the cooling water heat exchanger for cooling the cooling water flowing through the second cooling water circuit 30B by heat exchange between the cooling water and the refrigerant. As illustrated in FIGS. 1, 7, 9 or the like, the chiller 32 is also disposed at positions not overlapping the inverter module INV and the power supply module PWR as seen in the up-down direction at which an arrangement region in the up-down direction Z overlaps the inverter module INV and the power supply module PWR as illustrated in FIG. 7. Among the components forming the refrigerant circuit 20, the chiller 32 also tends to be relatively large. According to this configuration, such chiller 32 can also be arranged side by side with the inverter module INV and the power supply module PWR in the horizontal direction (here, the front-rear direction H). Therefore, it is easy to downsize the vehicle drive device 100 in the up-down direction Z.

Although a detailed route is not illustrated, as illustrated in FIGS. 1 and 8, the cooling unit 38 includes the cooling water path 39 through which the cooling water circulates. The switching element forming the inverter circuit PM is attached to the cooling unit first surface 38a, which is the upper surface of the cooling unit 38. The control board ECU that controls the inverter circuit PM is disposed between the switching element and the refrigerant circuit module 2 in the up-down direction Z.

Since a large current flows through the switching element forming the inverter circuit PM, this easily generates heat. Electronic components that are mounted on the control board ECU that controls the inverter circuit PM and form the control circuit that controls the inverter circuit PM are often relatively vulnerable to heat. According to this configuration, the switching element and the control board ECU can be disposed in a place where the heat from the rotary electric machine MG is less likely to be transferred by the cooling unit 38, and the switching element attached to the upper surface (cooling unit first surface 38a) of the cooling unit 38 can be appropriately cooled by the cooling unit 38, and the heat from the rotary electric machine MG can be made less likely to be transferred to the control board ECU.

FIGS. 10 to 13 illustrate a configuration example of the above-described vehicle drive device 100. Although not illustrated in FIG. 1 or the like, as illustrated in FIGS. 10 to 13, the vehicle drive device 100 is supported by a vehicle body (for example, a cross member) of the vehicle via a mount member 70. The mount member 70 is connected to the case 9 via a mount bracket 71. In this example, the vehicle drive device 100 is supported by the vehicle body via three mount members 70 including two mount members 70 arranged apart from each other in the axial direction L and a mount member 70 disposed on the lower side Z2 with respect to the two mount members 70. One mount member 70 is connected to the first case portion 91 from the axial direction first side L1 via the mount bracket 71, another mount member 70 is connected to the first case portion 91 from the axial direction second side L2 via the mount bracket 71, and the remaining one mount member 70 is connected to the second case portion 92 from the lower side Z2 via the mount bracket 71.

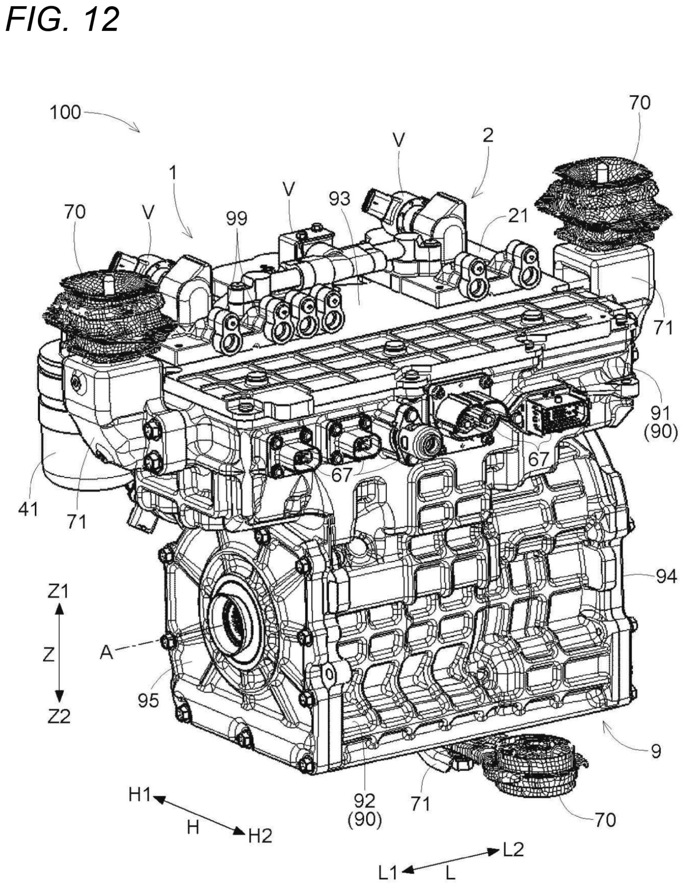

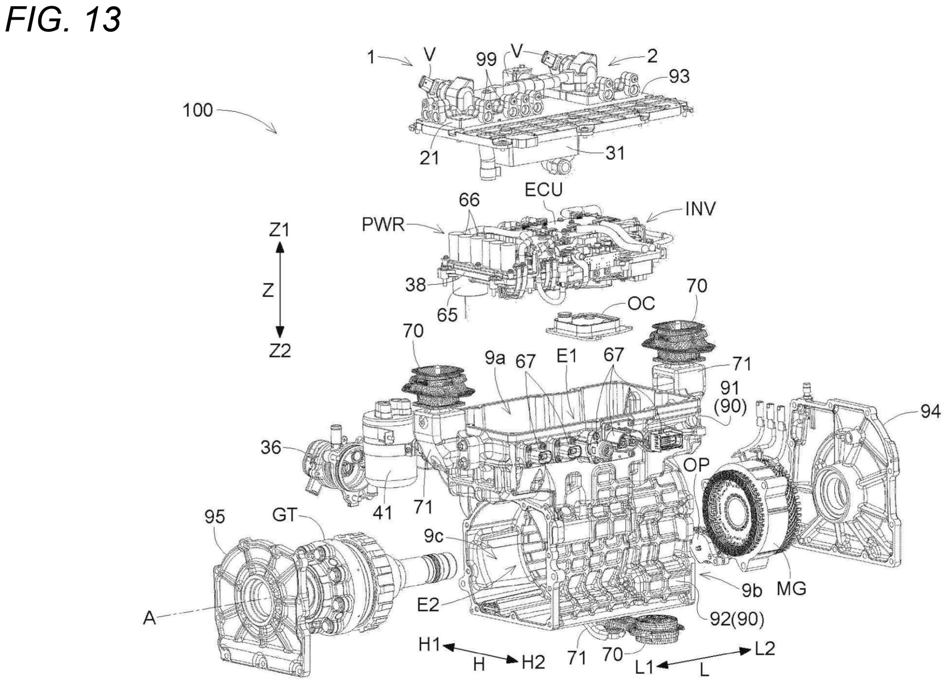

As illustrated in FIGS. 12 and 13, the case 9 (specifically, the first case portion 91) is provided with a connector 67 for electrically connecting a cable not illustrated disposed outside the case 9 to the inverter module INV, the power supply module PWR, or the control board ECU. Here, the connector 67 is disposed in a through hole formed in a wall portion of the first case portion 91 (specifically, the peripheral wall portion 96) on the front-rear direction second side H2. In the illustrated example, a plurality of connectors 67 (specifically, five connectors 67) are arranged side by side in the axial direction L. For example, a cable for transmitting a control signal to the control board ECU, a cable for supplying electric power to the control board ECU, a cable for supplying electric power to the inverter circuit PM, and a cable for supplying electric power to the charging circuit 62 are connected to the connector 67.

### [Other Embodiments]

Other embodiments will be described below. Note that, the configurations of the embodiments described below are not limited to those applied alone, and can be applied in combination with the configurations of other embodiments as long as there is no contradiction.
(1) In the above description, a mode in which the reducer 6 and the differential gear mechanism 5 are provided as the power transmission mechanism GT has been exemplified. However, the power transmission mechanism GT is not limited to such a configuration. The power transmission mechanism GT may include only the differential gear mechanism 5 without including the reducer 6, for example. The power transmission mechanism GT may include only the reducer 6 without including the differential gear mechanism 5, and may be configured to transmit power from one rotary electric machine MG to one wheel W. In the present embodiment, the planetary gear mechanism having a fixed gear ratio is exemplified as the reducer 6, but the reducer 6 may have a plurality of gear ratios.
(2) As illustrated in FIG. 8, in a mode in which the DC link capacitor 16 is arranged side by side with the inverter circuit PM on the cooling unit first surface 38a, the DC link capacitor 16 may be included in the inverter module INV. However, for example, in a case where the DC link capacitor 16 is disposed on a rear surface (the surface opposite to the cooling unit first surface 38a) side of the cooling unit 38, the DC link capacitor 16 is not necessarily included in the inverter module INV. For example, the DC link capacitor 16 may be disposed on the lower side Z2 with respect to the cooling unit 38 at a position overlapping the power transmission mechanism GT as seen in the up-down direction. The DC link capacitor 16 is a component that is relatively resistant to heat, and by disposing such component closer to the rotary electric machine MG than the cooling unit 38 at an arrangement position in the up-down direction Z and on the power transmission mechanism GT side away from the rotary electric machine MG at the arrangement position in the axial direction L, it is possible to effectively utilize the space on the lower side Z2 with respect to the cooling unit 38, and it is easy to downsize the entire vehicle drive device 100.
   Note that, the on-vehicle inverter unit 10 preferably includes the DC link capacitor 16 regardless of the arrangement position of the DC link capacitor 16.
(3) In a case where both the converter 61 and the charging circuit 62 included in the power supply module PWR are of a transformer type or the like, it is preferable to share a transformer component that tends to be large. Similarly to DC link capacitor 16, the transformer also is a component that is relatively resistant to heat. Therefore, the transformer also is preferably disposed on the lower side Z2 with respect to the cooling unit 38 at a position overlapping the power transmission mechanism GT as seen in the up-down direction. By effectively utilizing the space on the lower side Z2 with respect to the cooling unit 38 in this manner, it is easy to downsize the entire vehicle drive device 100. In the example illustrated in FIGS. 11 and 13, a capacitor 66 included in the power supply module PWR is disposed on the upper side Z1 than the cooling unit 38, and a transformer 65 included in the power supply module PWR is disposed on the lower side Z2 with respect to the cooling unit 38.
(4) In the above description, as illustrated in FIG. 5 or the like, there has been exemplified a mode in which the refrigerant circuit module 2 disposed on the upper side Z1 in the up-down direction Z with respect to the inverter module INV and the power supply module PWR includes the refrigerant manifold 21 (refrigerant path component) forming the flow path of the refrigerant in the refrigerant circuit 20 and the control valve V attached to the refrigerant manifold 21, and the water-cooled condenser 31 (refrigerant heat exchanger) is not included in the refrigerant circuit module 2 but is attached to the first cover second surface 93b on the lower side Z2 of the refrigerant manifold 21. However, similarly to the control valve V, in a case where the water-cooled condenser 31 is attached to the first cover first surface 93a on the upper side Z1 of the refrigerant manifold 21, the water-cooled condenser 31 may be included in the refrigerant circuit module 2.
(5) In the above description, a mode in which the refrigerant flow path 29 is formed inside the first cover 93 as the refrigerant manifold 21 has been exemplified. As a matter of course, a substantially entire refrigerant flow path 29 is not necessarily formed inside the first cover 93, and a part of the refrigerant flow path 29 may be formed using another member of the case 9 or piping or the like formed of a member other than that of the case 9.
(6) In the above description, a mode has been exemplified in which the protrusion 93p of the first cover 93 protrudes from the case 9 toward the specific opening surface direction first side Ya1 (first direction first side), which is one side in the specific opening surface direction Ya (first direction). However, the protrusion 93p may be formed so as to protrude in a plurality of directions in the opening surface direction Y. In the above description, the protrusion 93p protruding from one side (surface) of the first case portion 91 formed in a rectangular box shape toward the outside of the first opening portion 9a has been exemplified. However, the protrusion 93p may be formed so as to protrude from a plurality of sides of the first case portion 91 toward the outside of the first opening portion 9a.
(7) In the above description, a mode has been exemplified in which the specific functional component that is at least a part of the plurality of functional components attached to the surface (the first cover second surface 93b) of the protrusion 93p facing the opening direction second side X2 (the opening direction case side) and connected to the refrigerant flow path 29 is the water-cooled condenser 31, the accumulator 41, and the chiller 32. In the above description, a mode in which all the control valves V are disposed on the surface (first cover first surface 93a) on the opening direction first side X1 of the protrusion 93p has been exemplified. However, at least a part of these control valves V may be included in the specific functional component, and the control valve V may be attached to the first cover second surface 93b.

### [Summary of Present Embodiment]

Hereinafter, a summary of embodiments of the vehicle drive device described above will be described.

A vehicle drive device (100) includes a rotary electric machine (MG) including a rotor (12), output members (52, 53, 54, 59, DS1, DS2, J) drivingly connected to a wheel (W), a power transmission mechanism (GT) that transmits a driving force between the rotary electric machine (MG) and the output members (52, 53, 54, 59, DS1, DS2, J), an inverter module (INV) for controlling driving of the rotary electric machine (MG), a power supply module (PWR) including circuits (61, 62) electrically connected to an on-vehicle battery (BT), a refrigerant circuit module (2) forming at least a part of a refrigerant circuit (20) for circulating a refrigerant for an on-vehicle air conditioner, and a case (9) including a first accommodation chamber (E1) that accommodates the inverter module (INV) and a second accommodation chamber (E2) that accommodates the rotary electric machine (MG) and the power transmission mechanism (GT), in which the power supply module (PWR) is accommodated in the first accommodation chamber (E1), the refrigerant circuit module (2) includes integrated portions (21, V) that are portions integrated with the case (9), and the integrated portions (21, V) include a component (21) forming a part of the case (9) and a component (V) attached to the case (9).

According to this configuration, the vehicle drive device (100) not only integrally includes the inverter module (INV) for controlling driving of the rotary electric machine (MG) with the rotary electric machine (MG) and the power transmission mechanism (GT), but also integrally includes the power supply module (PWR) and the refrigerant circuit module (2) for the on-vehicle air conditioner with the rotary electric machine (MG) and the power transmission mechanism (GT). Therefore, wiring, piping or the like connecting these elements can be reduced or shortened, and the vehicle drive device (100) can be easily downsized. Furthermore, according to this configuration, not only the rotary electric machine (MG), the power transmission mechanism (GT), and the inverter module (INV) but also the power supply module (PWR) is accommodated in the case (9), and the refrigerant circuit module (2) includes the integrated portions (21, V) that are portions integrated with the case (9). Therefore, it is possible to implement the integrated vehicle drive device (100) with many functions, and it is easy to downsize the vehicle drive device (100) also from this point. According to this configuration, the thermal management system including the vehicle drive device (100) as a core can be appropriately formed using the components included in the integrated portions (21, V) of the refrigerant circuit module (2). In this manner, according to this configuration, it is possible to appropriately form the thermal management system in the vehicle using the vehicle drive device (100) as the core and form the small vehicle drive device (100).

Here, a first heat exchanger (31) that performs heat exchange between cooling water for cooling the inverter module (INV) and the refrigerant, and a second heat exchanger (OC) that performs heat exchange between oil accommodated in the second accommodation chamber (E2) and the cooling water are preferably included, in which the first heat exchanger (31) is preferably disposed outside the case (9), and the second heat exchanger (OC) is preferably accommodated in the first accommodation chamber (E1).

According to this configuration, while downsizing the case (9) by disposing the first heat exchanger (31) that tends to be relatively large outside the case (9), it is possible to simplify the flow paths of the oil and the cooling water without requiring external piping around the second heat exchanger (OC) by accommodating the second heat exchanger (OC) in the first accommodation chamber (E1) inside the case (9).

### REFERENCE SIGNS LIST

2: Refrigerant circuit module, 9: Case, 12: Rotor, 20: Refrigerant circuit, 21: Refrigerant manifold (integrated portion, component forming part of case), 31: Water-cooled condenser (first heat exchanger), 52: Side gear (output member), 53: First side gear (output member), 54: Second side gear (output member), 59: Spline engagement unit (output member), 61: Converter (circuit electrically connected to on-vehicle battery), 62: Changing circuit (circuit electrically connected to on-vehicle battery), 100: Vehicle drive device, BT: On-vehicle battery, DS1: First drive shaft (output member), DS2: Second drive shaft (output member), E1: First accommodation chamber, E2: Second accommodation chamber, GT: Power transmission mechanism, INV: Inverter module, J: Connection shaft (output member), MG: Rotary electric machine, OC: Oil cooler (second heat exchanger), PWR: Power supply module, V: Control valve (integrated portion, component attached to case), and W: Wheel

## Claims

1. A vehicle drive device comprising:
a rotary electric machine including a rotor;
an output member drivingly connected to a wheel;
a power transmission mechanism that transmits a driving force between the rotary electric machine and the output member;
an inverter module for controlling driving of the rotary electric machine;
a power supply module including a circuit electrically connected to an on-vehicle battery;
a refrigerant circuit module forming at least a part of a refrigerant circuit for circulating a refrigerant for an on-vehicle air conditioner; and
a case including a first accommodation chamber that accommodates the inverter module and a second accommodation chamber that accommodates the rotary electric machine and the power transmission mechanism, wherein
the power supply module is accommodated in the first accommodation chamber,
the refrigerant circuit module includes an integrated portion that is a portion integrated with the case, and
the integrated portion includes a component forming a part of the case and a component attached to the case.

2. The vehicle drive device according to claim 1, comprising:
a first heat exchanger that performs heat exchange between cooling water for cooling the inverter module and the refrigerant; and
a second heat exchanger that performs heat exchange between oil accommodated in the second accommodation chamber and the cooling water, wherein
the first heat exchanger is disposed outside the case, and
the second heat exchanger is accommodated in the first accommodation chamber.
